(19) Europäisches Patentamt
European Patent Office
Office européen des brevets

(11) EP 3 699 215 A1

(12) EUROPEAN PATENT APPLICATION
published in accordance with Art. 153(4) EPC

(43) Date of publication:
**26.08.2020 Bulletin 2020/35**

(21) Application number: **18867733.0**

(22) Date of filing: **17.10.2018**

(51) Int Cl.:
***C08G 18/02*** *(2006.01)* ***C08G 18/09*** *(2006.01)*
***C08G 18/79*** *(2006.01)* ***C09D 175/04*** *(2006.01)*

(86) International application number:
**PCT/JP2018/038653**

(87) International publication number:
**WO 2019/078250 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2017 JP 2017203751**

(71) Applicant: **Asahi Kasei Kabushiki Kaisha**
**Tokyo 100-0006 (JP)**

(72) Inventors:
- **AZUMA Koichiro**
  **Tokyo 100-0006 (JP)**
- **KATAGAWA Hironori**
  **Tokyo 100-0006 (JP)**

(74) Representative: **Strehl Schübel-Hopf & Partner**
**Maximilianstrasse 54**
**80538 München (DE)**

# (54) POLYISOCYANATE COMPOSITION, COATING MATERIAL COMPOSITION, AND COATING FILM

(57) A polyisocyanate composition according to the present invention includes a polyisocyanate having an isocyanurate group, derived from one or more types of diisocyanates selected from the group consisting of an aliphatic diisocyanate and an alicyclic diisocyanate, UV absorption peaks of a trimeric equivalent of the diisocyanate and a tetrameric equivalent of the diisocyanate being present in a spectrum of the polyisocyanate composition measured by gel permeation chromatography, the ratio ((B)/(A)) of the height (B) of the UV absorption peak of the tetrameric equivalent of the diisocyanate to the height (A) of the UV absorption peak of the trimeric equivalent of the diisocyanate being 0.01 to 3, and the content of a volatile component produced from storage for three months at 60°C being 0.3% by mass or less with respect to the total mass of the polyisocyanate composition prior to storage, the volatile component having been removed from the polyisocyanate composition in advance.

EP 3 699 215 A1

## Description

### TECHNICAL FIELD

The present invention relates to a polyisocyanate composition, a coating material composition and a coating film.
The present invention claims priority on the basis of Japanese Patent Application No. 2017-203751, filed in Japan on October 20, 2017, the contents of which are incorporated herein by reference.

### BACKGROUND OF THE INVENTION

Since coating films formed from urethane coating material compositions using polyisocyanates as curing agents are excellent in chemical resistance, flexibility, weather resistance, or the like, the urethane coating material compositions are widely used as coating materials in automotives, architectural interiors or exteriors, home electrical appliances, or the like. Among these, coating films formed by polyisocyanates derived from aliphatic diisocyanates are characterized by being yellowing-free. Furthermore, it is known that isocyanurate-type polyisocyanates have excellent weather resistance and chemical resistance, and are used in fields where these performances are required.
As a prior document relating to the isocyanurate-type polyisocyanate, Patent Document 1 discloses that a polyisocyanate composition having an excellent moisture stability is obtained by controlling the phosphorus concentration in the polyisocyanate composition within a constant range, for example.
Furthermore, Patent Documents 2 and 3 disclose that polyisocyanate compositions having a low viscosity and low generation of 1,6-hexamethylene diisocyanate (HDI) in storage are obtained by using specific structural components and specific structural ratios thereof in the polyisocyanate compositions.
Furthermore, Patent Document 4 discloses a method in which a monoalcohol and HDI are reacted to form a urethane body, followed by conducting an isocyanurate-forming reaction. Patent Document 4 discloses that the method makes it possible to obtain a polyisocyanate composition having a high solid content, a low viscosity, and a low polar organic solvent reducibility.
Furthermore, Patent Document 5 discloses that a polyisocyanate composition in which generation of turbidity or decrease in luster is suppressed and coloring is prevented is obtained by obtaining an isocyanurate-type polyisocyanate composition from HDI, followed by conducting distillation and heating treatment.
In addition, Patent Document 6 discloses a method for manufacturing polyisocyanates in which the color valency is decreased by irradiating HDI-based polyisocyanates with light at a wavelength of 200 nm to 600 nm.

### DOCUMENTS OF RELATED ART

#### Patent Documents

Patent Document 1: Japanese Patent Publication No. 4201582
Patent Document 2: Japanese Patent Publication No. 5178200
Patent Document 3: Japanese Patent Publication No. 5183206
Patent Document 4: Japanese Patent Publication No. 3065889
Patent Document 5: Japanese Unexamined Patent Application Publication No. 2015-172164
Patent Document 6: WO 2010/046327

### SUMMARY OF THE INVENTION

#### PROBLEMS TO BE SOLVED BY THE INVENTION

However, the techniques described in Patent Documents 1 to 6 still have room for improvement in terms of color stability and viscosity stability when the resultant polyisocyanate compositions are stored.
The present invention has been made in view of the above-mentioned circumstances, and aims to provide a polyisocyanate composition having favorable color stability and viscosity stability when stored under high-temperature conditions. Furthermore, the present invention aims to provide a coating material composition containing the polyisocyanate composition and having favorable solvent reducibility and drying property. Furthermore, the present invention aims to provide a coating film containing the coating material composition and having an excellent transparency and resistance to thermal-yellowing denaturation.

MEANS TO SOLVE THE PROBLEMS

The present invention involves the following embodiments.

A polyisocyanate composition according to the first embodiment of the present invention contains a polyisocyanate having an isocyanurate group derived from at least one diisocyanate selected from the group consisting of aliphatic diisocyanates and alicyclic diisocyanates, the polyisocyanate composition having UV absorption peaks of a trimeric equivalent of the diisocyanate and a tetrameric equivalent of the diisocyanate in a spectrum of the polyisocyanate composition measured by gel permeation chromatography (GPC), wherein the ratio (B)/(A) of the height (B) of the UV absorption peak of the tetrameric equivalent of the diisocyanate to the height (A) of the UV absorption peak of the trimeric equivalent of the diisocyanate is 0.01 to 3, and the content of a volatile component produced by storage for three months at 60°C, relative to the total mass of the polyisocyanate composition prior to the storage, from which the volatile component is removed in advance, is 0.3% by mass or less.

The polyisocyanate composition according to the first embodiment may further contain a polyisocyanate having an allophanate group.

The polyisocyanate composition according to the first embodiment may further contain a polyisocyanate having a uretdione group.

The polyisocyanate composition according to the first embodiment may further contain a polyisocyanate having an iminooxadiazinedione group.

A coating material composition according to the second embodiment of the present invention contains the polyisocyanate composition of the first embodiment.

A coating film according to the third embodiment of the present invention is formed by the coating material composition of the second embodiment.

EFFECTS OF THE INVENTION

The polyisocyanate composition has excellent color stability and viscosity stability when stored under high-temperature conditions. Furthermore, the coating material composition contains the polyisocyanate composition as a coating curing agent, and has favorable solvent reducibility and drying property. Furthermore, the coating film is obtained from the coating material composition, and has favorable transparency and resistance to thermal-yellowing denaturation.

EMBODIMENTS FOR CARRYING OUT THE INVENTION

Embodiments of the present invention (hereinafter, referred to as "the present embodiment" simply) will be explained below in detail. The present embodiments shown below are examples that describe the present invention and are not intended to limit the present invention to the following embodiments. The present invention may be modified in various ways without departing from the scope thereof.

In the present specification, the term "polyisocyanate" refers to a reactant in which plural compounds having at least one isocyanate group (-NCO) are bonded together. One molecule of a compound having at least one isocyanate group (-NCO) constituting a polyisocyanate may be referred to as a monomer.

In the present specification, the term "(meth)acryl" involves methacryl and acryl, and the term "(meth)acrylate" involves methacrylate and acrylate.

«Polyisocyanate composition»

A polyisocyanate composition according to the present embodiment contains a polyisocyanate having an isocyanurate group (hereinafter, may be abbreviated as "isocyanurate-type polyisocyanate").

An "isocyanurate group" is a functional group derived from a polyisocyanate composed of three molecules of diisocyanate monomer (hereinafter, may be abbreviated as "diisocyanate trimer"), and is a group of formula (I) shown below.

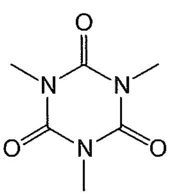

(I)

In the spectrum of the polyisocyanate composition according to the present embodiment measured by gel permeation chromatography (hereinafter, may be abbreviated as GPC), UV absorption peaks of a trimeric equivalent

of the diisocyanate and a tetrameric equivalent of the diisocyanate are present. The tetrameric equivalent of the diisocyanate can be measured as a compound having an UV absorption peak between the trimeric equivalent of the diisocyanate and a pentameric equivalent of the diisocyanate in the GPC spectrum, that is, in an area of the tetrameric equivalent of the diisocyanate. At the time, the ratio (B)/(A) of the height (B) of the UV absorption peak of the tetrameric equivalent of the diisocyanate to the height (A) of the UV absorption peak of the trimeric equivalent of the diisocyanate is preferably 0.01 to 3.

The height of the UV absorption peak of the trimeric equivalent of the diisocyanate and the height of the UV absorption peak of the tetrameric equivalent of the diisocyanate can be determined by GPC measured under the conditions shown below, specifically.

- Carrier: Tetrahydrofuran (hereinafter, abbreviated as "THF")
- Column: Column series "TSKgel Super H1000", "TSKgel Super H 2000", and "TSKgel Super H3000" (manufactured by TOSOH CORPORATION) are connected.
- Detector: UV (used when the height ratio is determined, the measurement wavelength: 254 nm)

Refractometer (used when trimer and pentamer of diisocyanates are identified.)

- GPC apparatus: "HLC-8120 GPC" (manufactured by TOSOH CORPORATION)

The UV absorption peak of the diisocyanate trimeric (isocyanurate trimeric) equivalent appears at a retention time of approximately 11.7 minutes, and the UV absorption peak of the diisocyanate pentamer appears at a retention time of approximately 11.0 minutes. The UV absorption peak of the tetrameric equivalent of the diisocyanate appears between the UV absorption peak of the diisocyanate trimer and the UV absorption peak of the diisocyanate pentamer.

Furthermore, the content of a volatile component produced by storage for three months at 60°C, relative to the total mass of the polyisocyanate composition prior to the storage, from which the volatile component is removed in advance, is 0.3% by mass or less. Here, the content of the volatile component resulting from storage at 60°C for 3 months means the mass ratio, relative to the total mass (C) of a polyisocyanate composition (c), from which volatile components are previously removed by conducting vacuum treatment at 23°C and 0.1 Torr for 1 hour, of the mass obtained by subtracting, from the total mass (C), the total mass (D) of a polyisocyanate composition (d) obtained by storing the polyisocyanate composition (c) at 60°C for 3 hours, followed by removing volatile components therefrom by conducting vacuum heat treatment at 100°C and 0.1 Torr for 1 hour. Specifically, the content of the volatile components produced by conducting storage at 60°C for 3 hours is calculated in accordance with the formula shown below as the mass reduction rate.

$$\text{Mass reduction rate (\% by mass)} = [(C) - (D)] / (C) \times 100$$

<Polyisocyanate>

[Isocyanurate-type polyisocyanate]

An isocyanurate-type polyisocyanate is a reactant derived from diisocyanate monomers. Specifically, the diisocyanate monomers are reacted using an isocyanurate-forming reaction catalyst and an alcohol as a co-catalyst to obtain an isocyanurate-type polyisocyanate.

The amount of the tetrameric equivalent of the diisocyanate in the polyisocyanate composition according to the present embodiment may be controlled to be within a specified range by conducting both the thin film distillation step and the heating treatment step as shown in the Examples mentioned below when an isocyanurate-type polyisocyanate is synthesized and purified.

Examples of the diisocyanate monomers used to produce isocyanurate-type polyisocyanates include aliphatic diisocyanates and alicyclic diisocyanates.

The aliphatic diisocyanate preferably has a carbon number of 4 to 30. Specific examples of the aliphatic diisocyanate include 1,4-tetramethylene diisocyanate, 1,5-pentamethylene diisocyanate, 1,6-hexamethylene diisocyanate (hereinafter, referred to as "HDI"), 2,2,4-trimethyl-1,6-hexamethylene diisocyanate, and lysine diisocyanate.

The alicyclic diisocyanate preferably has a carbon number of 8 to 30. Specific examples of the alicyclic diisocyanate include isophorone diisocyanate (hereinafter, referred to as "IPDI"), 1,3-bis(isocyanatomethyl)-cyclohexane, 4,4'-dicyclohexylmethane diisocyanate, norbornene diisocyanate, and hydrogenated xylylene diisocyanate.

One kind of these diisocyanates may be used alone or at least two thereof may be used in combination.

Among these, HDI or IPDI is preferable, and HDI is more preferable, as the diisocyanate monomer to be used to produce an isocyanurate-type polyisocyanate in an industrial scale.

Examples of an isocyanurate-forming reaction catalyst to be used to produce an isocyanurate-type polyisocyanate include sodium, potassium, quaternary ammonium salts of fatty acids.

Examples of the fatty acids include acetic acid, propionic acid, butyric acid, valeric acid, caproic acid, heptanoic acid, caprylic acid, pelargonic acid, capric acid, lauric acid, myristic acid, palmitic acid, and stearic acid. These fatty acids may be linear or branched.

Examples of quaternary ammonium include tetramethylammonium, tetrabutylammonium, butyltrimethylammonium, benzyltrimethylammonium, dibenzyldimethylammonium, and phenyltrimethylammonium.

Although the amount of isocyanurate-forming reaction catalyst used depends on the amount of a co-catalyst and a solvent used, the amount thereof is usually 0.001% by mass to 0.05% by mass, relative to the mass of HDI, when HDI is used as a raw material to produce a polyisocyanate.

Examples of an alcohol to be used as a co-catalyst include phenolic hydroxy compounds and alcoholic hydroxy compounds. The use of the alcohol allows the isocyanurate-forming reaction to progress further easily.

Examples of the phenolic hydroxy compounds include phenol, cresol, and trimethylphenol.

Examples of the alcoholic hydroxy compounds include linear alcohol, branched alcohol, cyclic alcohol, and polyhydric alcohol.

Examples of the linear alcohol include methanol, ethanol, propanol, n-butanol, and 1-hexanol.

Examples of the branched alcohol include isobutanol, and 2-ethylhexanol.

Examples of the cyclic alcohol include cyclohexanol.

Examples of the polyhydric alcohol include ethylene glycol.

The amount of alcohol used is correlated with the amount of allophanate group of the polyisocyanate included in the polyisocyanate composition according to the present embodiment. When HDI is used as a raw material to produce a polyisocyanate, it is preferable that the amount of alcohol, relative to the mass of HDI, be 500 ppm by mass to 30,000 ppm by mass. In the case where the amount of alcohol used is the above-mentioned upper limit or less, the ratio of isocyanurate group in the polyisocyanate contained in the polyisocyanate composition according to the present embodiment is appropriately maintained, and thus the weather resistance and the chemical resistance are further improved. On the other hand, in the case where the amount of alcohol used is the above-mentioned lower limit or more, the reaction rate is maintained higher, which results in better productivity in terms of economy.

In the preparation of isocyanurate-type polyisocyanates, the alcohol may be added such that the alcohol is present in the reaction system during the isocyanurate-forming reaction. Specifically, the alcohol may be added at any time of the time prior to the isocyanurate-forming reaction, the time when an isocyanurate-forming catalyst is added, and the time during proceeding the isocyanulate-forming reaction after completion of addition of the isocyanurate-forming catalysis. The alcohol may be added at one time or all times of the above-mentioned times. The method of addition of alcohol may be either bulk addition or continuous addition. However, from the viewpoint of controlling reaction and exotherm, the continuous addition is preferable when an alcohol is added during progression of the isocyanurate-forming reaction. When an alcohol is added prior to isocyanurate-forming reaction, the bulk addition is preferable from the viewpoint of economic efficiency.

The isocyanurate-forming reaction temperature is preferably 70°C or less, and more preferably 30°C to 65°C. In the case where the isocyanurate-forming reaction temperature is the above-mentioned upper limit or less, a polyisocyanate having a further favorable chromaticity can be obtained. On the other hand, in the case where the isocyanurate-forming reaction temperature is the above-mentioned lower limit or more, the reaction rate is kept further moderate, which results in further favorable productivity in terms of economy.

Although the reaction time depends on the amount of catalyst, the amount of alcohol as a co-catalyst, the addition method, and the reaction temperature, the reaction time is usually 1 hour to 6 hours.

The decrease in the content of isocyanate group (NCO%) accompanying the progress of isocyanurate-forming reaction can be measured by titration analysis, and thus the reaction may be stopped when the predetermined NCO% is obtained.

The NCO% or the viscosity of an isocyanurate type polyisocyanate may be freely changed depending on the NCO% when the reaction is stopped.

An acidic compound may be used as a reaction-terminating agent. Examples of the acidic compound include hydrochloric acid, phosphoric acid, dimethyl phosphate, diethyl phosphate, dibutyl phosphate, di-2-ethylhexyl phosphate, dicyclohexyl phosphate, P-toluenesulfonic acid, benzenesulfonic acid, alkylbenzenesulfonic acid, acetyl chloride, and benzoyl chloride. Furthermore, similar compounds to these acidic compounds may also be used.

The amount of the reaction-terminating agent to be used, relative to 1 mol of carboxylic acid contained in the isocyanurate-forming reaction catalyst, may be 0.5-fold mol to 10-fold mol, and preferably equivalent mol to 8-fold mol. In the case where a soluble reaction-terminating agent is used in a mixture solution composed of diisocyanate monomers used as raw materials and a polyisocyanate produced in the reaction, the amount of the soluble reaction-terminating

agent, relative to 1 mol of carboxylic acid contained in the isocyanurate-forming reaction catalyst, may be approximately equivalent mol. In the case where an insoluble reaction-terminating agent is used, the amount thereof, relative to 1 mol of carboxylic acid contained in the isocyanurate-forming reaction catalyst, may be 2-fold mol to 8-fold mol.

After the reaction-terminating agent is added, heat curing may be conducted to stop the reaction completely. In the case of heat curing, the temperature is preferably 80°C to 150°C, more preferably 80°C to 130°C, and even more preferably 90°C to 120°C. In the case where the temperature is the above-mentioned upper limit or less, the decrease in the amount of 1-nylon in the polyisocyanate composition containing the resulting isocyanurate-type polyisocyanate can be further suppressed, and the decrease in the chromaticity and the increase in the viscosity due to the progression of the multimerization of the isocyanurate-type polyisocyanate can be further suppressed. In the case where the temperature is the above-mentioned lower limit or more, the growth of the salt produced by termination reaction can be promoted, and especially in the case where both a catalyst that forms an insoluble salt and a reaction-terminating agent are used, the formation of a salt having a separable size is further promoted, which results in further favorable economic productivity

Although the optimum heat curing time depends on the temperature, the optimum heat curing time may be 10 minutes to 120 minutes, preferably 10 minutes to 90 minutes, and more preferably 10 minutes to 60 minutes. In the case where the time is the above-mentioned upper limit or less, the coloring and the increase in the viscosity due to further multimerization of the polyisocyanate can be suppressed, although depending on the temperature. In the case where the time is the above-mentioned lower limit or more, the salt formation and growth can be made more adequate, and in the case of an insoluble salt, separation by filtration can be further facilitated.

Generally, in the case where HDI is used as a raw material, the HDI content in the resultant product is preferably 0.5% by mass or less from the viewpoint of the toxicity thereof. In addition, in the case where many trimeric or more-meric polycyclic products composed of 3 diisocyanate monomer molecules are present in the polyisocyanate composition, the compatibility with the solvent tends to decrease, which results in white turbidity, in addition to problems in terms of physical properties such as the viscosity and the hardness. Therefore, the reaction may be controlled using the reaction-terminating agent such that the content of isocyanate group (NCO%) in the solution of the reaction product after distillation becomes around 20% by mass.

The amount of HDI contained in the resultant product can be determined by gas chromatography. The amount of trimer contained in the resultant product can be quantified by liquid chromatography, since the trimer appears clearly around the molecular weight of 504. In addition, the amount of isocyanurate group can be quantified from an infrared absorption spectrum, since the isocyanurate group exhibits a clear absorption at 1680 $cm^{-1}$ in the infrared absorption spectrum.

The amount of polycyclic compound contained in the resultant product can also be quantified in the same way as that of the trimer. Furthermore, the amount of dimer contained in the product can also be quantified by an infrared absorption spectrum, since the dimer exhibits a clear absorption at 1780 $cm^{-1}$ in the infrared absorption spectrum.

In the case where HDI is used as the raw material, preferable examples of a method for producing an isocyanurate-type polyisocyanate include a method in which the isocyanurate-forming reaction is conducted under the same conditions as mentioned above using a polyol adduct in which urethane is formed from a portion of HDI.

The urethane-forming reaction to form the polyol adduct may be conducted using a conventionally-known method. Specifically, a polyol is added to HDI, the reaction temperature may set to be 100°C or less, and preferably 70°C to 90°C, and the reaction time may be approximately 2 hours. Thus, the polyol adduct can be obtained. In the case where the reaction temperature is the above-mentioned upper limit or less, the coloring of the resultant product and the side-reaction can be suppressed.

Difunction or trifunctional polyols having a molecular weight of 3000 or less are preferable as the polyol used to form urethane. Examples of the polyols include diols (divalent alcohols), triols (trivalent alcohols), polyester polyols, and polyether polyols.

Examples of divalent alcohols include ethylene glycol, diethylene glycol, 1,3-butanediol (hereinafter, may be abbreviated as "1,3-BG"), 1,4-butanediol, propylene glycol, dipropylene glycol, neopentyl glycol, and 1,6-hexane glycol (hereinafter, may be abbreviated as "1,6-HG").

Examples of trivalent alcohols include glycerol, trimethylolethane, and trimethylolpropane.

One kind of these polyols may be used alone or at least two thereof may be used in combination.

The isocyanurate-type polyisocyanate obtained by the above-described production method may be used directly as the polyisocyanate composition according to the present embodiment, or may be used after conducting purification. Among these, the isocyanurate-type polyisocyanate obtained by the above-described production method is preferably used directly as the polyisocyanate composition according to the present embodiment in view of the manufacturing convenience.

(Thin-film distillation step)

The thin-film distillation step is a step to be conducted to improve the separation efficiency of low-boiling components from high-boiling components. Specifically, the step may be conducted, for example, by reducing the flow rate to extend the retention time, increasing the distillation temperature, increasing the wiper rotation speed, or increasing the distillation times, and any thereof may be conducted. Among these, it is preferable to increase the distillation times in order to reduce the thermal history and increase the separation efficiency. The distillation times is preferably 1 time to 5 times.

(Heating treatment step)

Furthermore, it is desired in the polyisocyanate composition according to the present embodiment not only to reduce the amount of diisocyanate monomers immediately after production (hereinafter, may be abbreviated as the "initial DI amount"), but also to maintain the amount of diisocyanate monomers generated during storage at a low level. Therefore, it is preferable that a heating treatment step be conducted.

The lower limit of the heating treatment temperature is preferably 60°C, more preferably 80°C, even more preferably 100°C, and even more preferably 110°C.

The upper limit of the heating treatment temperature is preferably 200°C, more preferably 180°C, even more preferably 160°C, and even more preferably 150°C.

The heating treatment temperature is preferably 60°C to 200°C, more preferably 80°C to 180°C, even more preferably 100°C to 160°C, and even more preferably 110°C to 150°C.

In the case where the heating treatment temperature is the lower limit or more, the time required to conduct the heating treatment step can be shortened. In the case where the heating treatment temperature is the upper limit or less, the coloring of the polyisocyanate composition can be further suppressed.

The lower limit of the time required to conduct the heating treatment step is preferably 0.2 hours, more preferably 0.5 hours, even more preferably 0.7 hours, and particularly preferably 1.0 hour.

The upper limit of the time required to conduct the heating treatment step is preferably 6 hours, more preferably 5 hours, even more preferably 4 hours, and particularly preferably 3 hours.

The time required to conduct the heating treatment step is preferably 0.2 hours to 6 hours, more preferably 0.5 hours to 5 hours, even more preferably 0.7 hours to 4 hours, and particularly preferably 1.0 hour to 3 hours.

In addition, the heating treatment step is preferably conducted under UV irradiation, under a nitrogen atmosphere, or under reduced pressure, and more preferably conducted under reduced pressure while conducting UV irradiation intermittently in order to suppress the coloration of the polyisocyanate composition and the amount of diisocyanate monomers generated during storage.

Furthermore, it is preferable to conduct the heating treatment step and then the thin-film distillation step to reduce the concentration of diisocyanate monomers, followed by conducting the heating treatment step again and then conducting the thin-film distillation step again, in order to suppress the decomposition of the polyisocyanate to diisocyanate monomers.

The amount of diisocyanate monomers generated during storage can be further reduced while further suppressing the amount of the initial HDI (HDI immediately after production), by conducting the above-mentioned treatment.

It is preferable that both the heating treatment step and the thin-film distillation step be conducted in a set. Furthermore, it is preferable that the temperature in the final thin-film distillation step be lower than the heating treatment temperature in the immediately preceding heating treatment step so as to further reduce the amount of the HDI immediately after production.

The polyisocyanate composition according to the present invention contains a trimeric equivalent of the diisocyanate and a tetrameric equivalent of the diisocyanate. The trimeric equivalent of the diisocyanate and the tetrameric equivalent of the diisocyanate can be detected as compounds having UV absorptions by conducting GPC measurement.

The amount of the trimeric equivalent of the diisocyanate and the tetrameric equivalent of the diisocyanate are indicated by the ratio ((B)/(A)) of the height (B) of the UV absorption peak of the tetrameric equivalent of the diisocyanate to the height (A) of the UV absorption peak of the trimeric equivalent of the diisocyanate.

The ratio (B)/(A) is preferably 0.01 to 3.0, more preferably 0.01 to 2.0, even more preferably 0.01 to 0.25, and even more preferably 0.01 to 0.05. In the case where the ratio (B)/(A) is the above-mentioned upper limit or less, the viscosity stability of the polyisocyanate composition, the solvent reducibility of the coating material composition, and the transparency of the coating film is further improved. In the case where the ratio (B)/(A) is the above-mentioned lower limit or more, the color stability of the polyisocyanate composition during storage under high-temperature conditions, the hardenability of the coating material composition and the resistance to thermal-yellowing denaturation of the coating film are further improved.

The amount of tetrameric equivalent of the diisocyanate contained in the polyisocyanate composition according

to the present embodiment (hereinafter, abbreviated as tetrameric equivalent) can be controlled by combining synthetic conditions, post-synthetic treatment conditions, thin film distillation conditions, and heating conditions.

For example, the lower the temperature during synthesis, the lower the amount of tetrameric equivalents produced. The upper limit of the temperature is preferably 70°C or less, more preferably 65°C or less, and even more preferably 60°C or less. The lower limit of the temperature is 30°C or more and preferably 50°C or more. In the case where the temperature is the above-mentioned lower limit or more, production can be conducted without deteriorating productivity. On the other hand, in the case where the temperature is the upper limit or less, the amount of the resultant tetrameric equivalent can be suppressed.

Furthermore, the amount of the tetrameric equivalent can be reduced depending on the temperature during post-synthetic treatment. The temperature is preferably 100°C or more, more preferably 110°C or more, and even more preferably 120°C or more. The upper limit of the temperature is 150°C or less. In the case where the posttreatment is conducted at the above-described lower limit or more, the amount of the tetrameric equivalent can be reduced. Meanwhile, it is possible to suppress the yellowing of the product by making the temperature to be the above-described upper limit or less.

Furthermore, as the thin-film distillation condition, the temperature during distillation can be set at a constant temperature or higher, and thereby reducing the amount of the tetrameric equivalents. The temperature is preferably 120°C or more, more preferably 130°C or more, and even more preferably 150°C or more. The upper limit thereof is 200°C or less and more preferably 180°C or less. In the case where the temperature is the lower limit or more, the amount of the tetrameric equivalent can be reduced. On the other hand, in the case where the temperature is the upper limit or less, it is possible to suppress the yellowing of the product.

The amount of the tetrameric equivalent can be effectively reduced by conducting the heating treatment after distillation. At the time, the heating temperature is 110°C or more, preferably 120°C or more, and even more preferably 130°C or more. The upper limit of the temperature is 200°C or less. In the case where the heating temperature is the lower limit or more, the amount of the tetrameric equivalent can be effectively reduced. In the case where the temperature is the above-mentioned upper limit or less, the yellowing denaturation of the product can be suppressed. Furthermore, the amount of the tetrameric equivalent can be further effectively reduced by conducting UV irradiation (at 254 nm) when conducting the heating treatment. The UV irradiation may be conducted continuously or intermittently for a constant length of time. Furthermore, the amount of the tetrameric equivalent can be effectively reduced for a short time by conducting heating treatment while conducting UV irradiation under reduced pressure conditions.

[Other polyisocyanates]

The polyisocyanates included in the polyisocyanate compositions according to the present embodiment may contain at least one selected from the group consisting of a urethodione group, an iminooxadiazinedione group, and an allophanate group, in addition to an isocyanurate group.

The "urethodione group" is generally a functional group derived from a polyisocyanate constituted by two molecules of diisocyanate monomers, and is a group of the following formula (II).

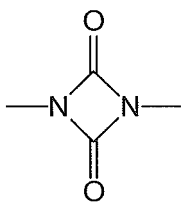

(II)

The "iminooxadiazinedione group" is a functional group derived from a polyisocyanate constituted by three molecules of diisocyanate monomers, and is a group of the following formula (III).

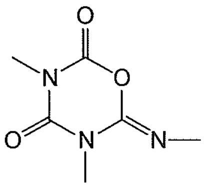

(III)

The "allophanate group" is a functional group formed from a hydroxyl group of an alcohol and an isocyanate

group, and is a group of the following formula (IV).

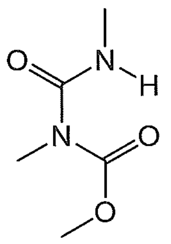

(IV)

(Polyisocyanate having a uretdione group)

A polyisocyanate having a uretdione group (uretdione group-containing polyisocyanate) can be obtained using a uretdione-forming reaction catalyst.
Although the uretdione-forming reaction catalyst is not limited to the following, examples thereof include tertiary phosphines such as trialkylphosphines, tris(dialkylamino)phosphines, and cycloalkylphosphines.
Examples of the trialkylphosphines include tri-n-butylphosphine and tri -n -octylphosphine.
Examples of the tris(dialkylamino)phosphines include tris(dimethylamino)phosphine.
Examples of the cycloalkylphosphines include cyclohexyl-di-n - hexylphosphine.
Many of these compounds promote the isocyanurate-forming reaction simultaneously to form an isocyanurate-type polyisocyanate in addition to a uretdione group-containing polyisocyanate.
When the desired yield is obtained, the uretdione-forming reaction is terminated by adding a deactivation agent against the uretdione-forming reaction catalyst, such as phosphoric acid, or methyl para-toluene sulfonate.
The amount of the uretdione-forming reaction catalyst to be used, relative to the mass of the diisocyanate used as a raw material, is preferably 10 ppm by mass to 10,000 ppm by mass, more preferably 10 ppm by mass to 1000 ppm by mass, and even more preferably 10 ppm by mass to 500 ppm by mass.
The lower limit of the uretdione-forming reaction temperature is preferably 20°C, more preferably 25°C, even more preferably 30°C, and particularly preferably 35°C.
The upper limit of the uretdione-forming reaction temperature is preferably 120°C, more preferably 110°C, even more preferably 100°C, and particularly preferably 90°C.
The uretdione-forming reaction temperature is preferably 20°C to 120°C, more preferably 25°C to 110°C, even more preferably 30°C to 100°C, and particularly preferably 35°C to 90°C.
In the case where the uretdione-forming reaction temperature is the upper limit or less, the change in the characteristics, such as coloring, of the resultant polyisocyanate composition can be effectively prevented.
Furthermore, the uretdione group-containing polyisocyanate can also be obtained by heating diisocyanate monomers without using the above-described uretdione-forming reaction catalyst.
In the case where the uretdione-forming reaction catalyst is not used, the lower limit of the heating temperature of diisocyanate monomers is preferably 120°C, more preferably 130°C, even more preferably 140°C, and particularly preferably 145°C.
The upper limit of the heating temperature of diisocyanate monomers is preferably 180°C, more preferably 175°C, even more preferably 170°C, and particularly preferably 165°C.
The heating temperature of diisocyanate monomers is preferably 120°C to 180°C, more preferably 130°C to 175°C, even more preferably 140°C to 170°C, and particularly preferably 145°C to 165°C.
In the case where the uretdione-forming reaction catalyst is not used, the lower limit of the heating time is preferably 0.2 hours, more preferably 0.4 hours, even more preferably 0.6 hours, even more preferably 0.8 hours, and particularly preferably 1.0 hour.
The upper limit of the heating time is preferably 8 hours, more preferably 6 hours, even more preferably 4 hours, even more preferably 3 hours, and particularly preferably 2 hours.
The heating time is preferably 0.2 hours to 8 hours, more preferably 0.4 hours to 6 hours, even more preferably 0.6 hours to 4 hours, even more preferably 0.8 hours to 3 hours, and particularly preferably 1.0 hour to 2 hours.
In the case where the heating time is the above-mentioned lower limit or more, the viscosity can be further decreased. In the case where the heating time is the above-mentioned upper limit or less, the coloring of the polyisocyanate can be further suppressed.
In the case where the polyisocyanate composition according to the present embodiment is obtained without using a uretdione-forming reaction catalyst, unreacted diisocyanate monomers are preferably removed after terminating the uretdione-forming reaction and the isocyanurate-forming reaction, the reactions being allowed to proceed only by conducted heating, so as to reduce the concentration of the unreacted diisocyanate monomers, reduce the change ratio

in the molecular weight of the resultant polyisocyanate composition after storage, and suppress the yellowing property when baking is conducted at a high temperature.

The molar ratio of uretdione group, relative to isocyanurate group, in the polyisocyanate contained in the polyisocyanate composition according to the present embodiment (uretdione group / isocyanurate group) is preferably 0.1/100 to 50/100, more preferably 0.1/100 to 40/100, even more preferably 2/100 to 40/100, and particularly preferably 4/100 to 40/100. In the case where the ratio of uretdione group/isocyanurate group is the above-mentioned upper limit or less, the color stability of the polyisocyanate composition when stored under high-temperature conditions, the drying property of the coating material composition and the resistance to thermal-yellowing denaturation of the resultant coating film are further improved. In the case where the ratio of uretdione group/isocyanurate group is the above-mentioned lower limit or more, the adhesiveness against a base material or base coating film is further improved.

(Polyisocyanate having an iminooxadiazinedione group)

A polyisocyanate having an iminooxadiazinedione group (iminooxadiazinedione group-containing polyisocyanate) can be obtained using an iminooxadiazinedione-forming reaction catalyst.

Examples of the iminooxadiazinedione-forming catalyst include the following.

(1) (Poly)hydrogen fluorides of general formula $M[F_n]$ or $M[F_n(HF)_m]$.
(In the formulae, m and n each represents an integer satisfying the relationship of m/n>0, M represents a n-charged cation (mixture) or at least one radical having a total valency of n.)
Specific examples of the compound (1) ((poly)hydrogen fluoride) include tetramethylammonium fluoride hydrate, and tetraethylammonium fluoride.
(2) Compounds composed of: a compound of general formula $R^1$-$CR'_2$-C(O)O-, or, $R^2$=CR'-C(O)O-; and either a quaternary ammonium cation, or, a quaternary phosphonium cation.

In the formulae, $R^1$ and $R^2$ each represents a branched, cyclic, and/or unsaturated CI-30 perfluoroalkyl group, and R' is identically or differently selected from the group consisting of a hydrogen atom, C1-20 alkyl groups and aryl groups, which may contain a hetero atom, as needed.

Specific examples of the compounds (2) include 3,3,3-trifluorocarboxylic acid; 4,4,4,3,3-pentafluorobutanoic acid; 5,5,5,4,4,3,3-heptafluoropentanoic acid; and 3,3-difluoropropa-2-enoic acid.

Although the lower limit of the amount of an iminooxadiazinedione-forming catalyst to be used is not particularly limited, the lower limit of the amount thereof, relative to the mass of HDI used as a raw material, is preferably 5 ppm by mass, more preferably 10 ppm by mass, and even more preferably 20 ppm by mass, from the viewpoint of reactivity.

The upper limit of the iminooxadiazinedione-forming catalyst to be used, relative to the mass of HDI used as a raw material, is preferably 5000 ppm by mass, more preferably 2000 ppm by mass, and even more preferably 500 ppm by mass, so as to suppress coloring and change in color of the resultant product or to control the reaction.

The amount of the iminooxadiazinedione-forming catalyst to be used, relative to the mass of HDI used as a raw material, is preferably 5 ppm by mass to 5000 ppm by mass, more preferably 10 ppm by mass to 2000 ppm by mass, and even more preferably 20 ppm by mass to 500 ppm by mass.

Although the lower limit of the iminooxadiazinedione-forming reaction temperature is not particularly limited, the lower limit is preferably 40°C, more preferably 50°C, and even more preferably 60°C, from the viewpoint of the reaction rate.

The upper limit of the iminooxadiazinedione-forming reaction temperature is preferably 150°C, more preferably 120°C, and even more preferably 110°C, so as to suppress the coloring and change in color of the resultant product.

The iminooxadiazinedione-forming reaction temperature is preferably 40°C to 150°C, more preferably 50°C to 120°C, and even more preferably 60°C to 110°C.

The iminooxadiazinedione-forming reaction can be terminated when the desired amount of iminooxadiazinedione group is obtained. The iminooxadiazinedione-forming reaction can be terminated by adding an acidic compound, such as a phosphoric acid, an acidic phosphate ester, a sulfuric acid, a hydrochloric acid, or a sulfonic acid compound, to the reaction liquid, for example. Thus, an iminooxadiazinedione-forming reaction catalyst is inactivated by neutralization, thermal decomposition, chemical decomposition, or the like. After the reaction is terminated, filtration is conducted, if needed.

The molar ratio of iminooxadiazinedione group, relative to isocyanurate group, in the polyisocyanate contained in the polyisocyanate composition according to the present invention (iminooxadiazinedione group / isocyanate group) is preferably 1/100 to 100/1, more preferably 2/100 to 100/2, and even more preferably 10/100 to 100/2. In the case where the molar ratio of iminooxadiazinedione group /isocyanate group is the above-mentioned lower limit or more, the adhesiveness against a base coating film tends to become favorable, generally. In the case where the molar ratio of iminooxadiazinedione group /isocyanate group is the above-mentioned upper limit or less, the drying property of a coating

material composition tends to become further favorable.

(Polyisocyanate having an allophanate group)

A polyisocyanate having an allophanate group (allophanate-containing polyisocyanate) is obtained using an alcohol compound with HDI and an allophanate-forming reaction catalyst.
Although the alcohol compound to be used to produce an allophanate-containing polyisocyanate is not limited to the following, alcohols formed by carbon, hydrogen and oxygen, only are preferable. Furthermore, the alcohol compound preferably has a molecular weight of 200 or less.
Examples of the alcohol compound include monoalcohols and dialcohols.
Examples of the monoalcohols include methanol, ethanol, propanol, butanol, pentanol, hexanol, heptanol, octanol, and nonanol.
Examples of the dialcohols include ethylene glycol, 1,3-butanediol, neopentyl glycol, and 2-ethyl hexanediol.
One of these alcohol compounds may be used alone or at least two thereof may be used in combination.
Among these, monoalcohols are preferable as alcohol compounds.
Although the amount of the alcohol compound to be used is not limited to the following, the molar ratio of isocyanate group of HDI to hydroxyl group of the alcohol compound is preferably 10/1 to 1000/1, and more preferably 100/1 to 1000/1. In the case where the molar ratio is the above-mentioned lower limit or more, an appropriate average number of isocyanate group in the resultant polyisocyanate can be obtained.
Although the allophanate-forming reaction catalyst is not limited to the following, examples thereof include salts of alkylcarboxylic acid, such as, tin, lead, zinc, bismuth, zirconium, or zirconyl salts.
Examples of tin salts of alkylcarboxylic acid (organic tin compounds) include tin 2-ethylhexanoate, and dibutyltin dilaurate.
Examples of lead salts of alkylcarboxylic acid (organic lead compounds) include lead 2-ethylhexanoate.
Examples of zinc salts of alkylcarboxylic acid (organic zinc compounds) include zinc 2-ethylhexanoat.
Examples of bismuth salts of alkylcarboxylic acid include bismuth 2-ethylhexanoate.
Examples of zirconium salts of alkylcarboxylic acid include zirconium 2-ethylhexanoate.
Examples of zirconyl salts of alkylcarboxylic acid include zirconyl 2-ethylhexanoate.
The allophanate-forming reaction can be terminated by adding a deactivation agent against the allophanate-forming reaction catalyst, such as a phosphoric acid or methyl para-toluene sulfonate, when the desired yield is obtained.
The amount of the allophanate-forming reaction catalyst to be used, relative to the mass of the diisocyanate used as a raw material, is preferably 10 ppm by mass to 10000 ppm by mass, more preferably 10 ppm by mass to 1000 ppm by mass, and even more preferably 10 ppm by mass to 500 ppm by mass.
The lower limit of the allophanate-forming reaction temperature is preferably 60°C, more preferably 70°C, even more preferably 80°C, and particularly preferably 90°C.
The upper limit of the allophanate-forming reaction temperature is preferably 160°C, more preferably 155°C, even more preferably 150°C, and particularly preferably 145°C.
The allophanate-forming reaction temperature is preferably 60°C to 160°C, more preferably 70°C to 155°C, even more preferably 80°C to 150°C, and particularly preferably 90°C to 145°C.
In the case where the allophanate-forming reaction temperature is the upper limit or less, the change in characteristics, such as coloring, of the resultant polyisocyanate can be further effectively prevented.
The lower limit of the reaction time is preferably 0.2 hours, more preferably 0.4 hours, even more preferably 0.6 hours, particularly preferably 0.8 hours, and more particularly preferably 1.0 hour.
The upper limit of the reaction time is preferably 8 hours, more preferably 6 hours, even more preferably 4 hours, particularly preferably 3 hours, and more particularly preferably 2 hours.
The allophanate-forming reaction time is preferably 0.2 hours to 8 hours, more preferably 0.4 hours to 6 hours, even more preferably 0.6 hours to 4 hours, particularly preferably 0.8 hours to 3 hours, and more particularly preferably 1.0 hour to 2 hours.
In the case where the allophanate-forming reaction time is the lower limit or more, the viscosity can be further decreased. In the case where the allophanate-forming reaction time is the upper limit or less, the coloring of the polyisocyanate can be further suppressed.
The isocyanurate-forming reaction catalyst may be used as an allophanate-forming reaction catalyst. In the case where the allophanate-forming reaction is conducted using the above-mentioned isocyanurate-forming reaction catalyst, an isocyanurate-type polyisocyanate is produced simultaneously. It is preferable that both the allophanate-forming reaction and the isocyanurate-forming reaction be conducted using the above-mentioned isocyanurate-forming reaction catalyst as an allophanate-forming reaction catalyst so as to improve the productivity from an economic viewpoint.
The above-mentioned isocyanurate-forming reaction and the above-mentioned uretdione-forming reaction may be conducted sequentially, or conducted in a parallel way.

It is preferable that the isocyanurate-forming reaction and the allophanate-forming reaction be allowed to proceed in a parallel way, followed by conducting the uretdione-forming reaction, because the production process can be simplified when the allophanate-forming reaction accompanies the isocyanurate-forming reaction.
The allophanate-forming reaction may be terminated when the desired amount of allophanate group is obtained.
Although the allophanate-forming reaction is not limited to the following, the allophanate-forming reaction may be terminated by adding an acidic compound, such as a phosphoric acid, an acidic phosphate ester, a sulfuric acid, a hydrochloric acid, or a sulfonic acid compound, to the reaction liquid. Thus, the allophanate-forming reaction catalyst can be inactivated by neutralization, thermal decomposition, or chemical decomposition. After the reaction is terminated, filtration is conducted, if needed.
The molar ratio of allophanate group, relative to isocyanurate group, in the polyisocyanate contained in the polyisocyanate composition according to the present embodiment (allophanate group /isocyanate group) may be 0.1/100 to 30/100, preferably 1/100 to 25/100, more preferably 6/100 to 20/100, and even more preferably 6/100 to 15/100. In the case where the molar ratio of allophanate group /isocyanate group is the above-mentioned upper limit or less, the color stability of the polyisocyanate composition when stored under high-temperature conditions, the drying property of a coating film, and the resistance to thermal-yellowing denaturation of the resultant coating film are further improved. In the case where the molar ratio of allophanate group / isocyanate group is the above-mentioned lower limit or more, the solvent reducibility of the coating material composition is further improved.
The molar ratio of allophanate group, relative to isocyanurate group, in the polyisocyanate contained in the polyisocyanate composition (allophanate group/isocyanate group) may be measured by $^{13}$C-NMR, for example.

«Coating material composition»

The polyisocyanate composition according to the present embodiment may be favorably used as a curing agent of a coating material composition.
A coating material composition according to the present embodiment contains the polyisocyanate composition according to the above-mentioned embodiment.

<Resin component>

The coating material composition according to the present embodiment further contains a resin component as a base component. Although the resin component is not particularly limited, the resin component preferably contains a compound having, in a molecule thereof, at least two active hydrogens having reactivity with an isocyanate group.
Although the compound having, in a molecule thereof, at least two active hydrogens is not limited to the following, examples thereof include polyols, polyamines, and polythiols. Among these, the compound having, in a molecule thereof, at least two active hydrogens is preferably a polyol. Although the polyol is not limited to the following, examples thereof include polyester polyols, polyether polyols, acrylic polyols, polyolefin polyols, and fluoropolyols.
The coating material composition according to the present embodiment may be made into a solvent-based, water-based, or solvent-free-based composition.
In the case of a solvent-based coating material composition, a resin containing a compound having, in a molecule thereof, at least two active hydrogens, or a solvent dilution thereof, to which another resin, or another additive such as a catalyst, a pigment, a leveling agent, an antioxidant, a ultraviolet absorber, a photostabilizer, a plasticizer, or a surfactant, is added, as needed, is prepared, for example. The polyisocyanate composition according to the present embodiment is added thereto as a curing agent, and then a solvent is further added to the mixture, as needed, to adjust the viscosity. Then, the resultant is stirred by hand stirring or using a stirrer such as Maselar, to obtain a solvent-based coating material composition.
In the case of a water-based coating material composition, an aqueous dispersion of a resin containing the compound having, in a molecule thereof, at least two active hydrogens, or an aqueous solution thereof, to which another resin, or another additive, such as a catalyst, a pigment, a leveling agent, an antioxidant, a ultraviolet absorber, a photostabilizer, a plasticizer, or a surfactant, is added, as needed, is prepared, for example. The polyisocyanate composition according to the present embodiment is added thereto as a curing agent, and then water or a solvent is further added to the mixture, as needed. Then, the resultant is stirred forcibly using a stirrer to obtain a water-based coating material composition.

[Polyester polyol]

A polyester polyol may be obtained by subjecting either a single dibasic acid or a mixture of at least two of dibasic acids and either a single polyhydric alcohol or a mixture of at least two of polyhydric alcohols to condensation reaction, for example.

Examples of the dibasic acid include carboxylic acids such as succinic acid, adipic acid, dimeric acid, maleic anhydride, phthalic anhydride, isophthalic acid, terephthalic acid, and 1,4-cyclohexanedicarboxylic acid.
Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerine, pentaerythritol, 2-methylol propanediol, and ethoxylated trimethylolpropane.
Specific examples of the production method of the polyester polyol include a method in which the above-mentioned components are mixed and then heated at approximately 160°C to 220°C to conduct condensation reaction.
Alternatively, polycaprolactones obtained by subjecting lactones such as ε-caprolactone to ring-opening polymerization using a polyhydric alcohol may be used as polyester polyols.
The polyester polyol obtained by the above-mentioned production method may be denatured using an aromatic diisocyanate, an aliphatic diisocyanate, an alicyclic diisocyanate, or a compound derived therefrom. Among these, the polyester polyol is preferably denatured using an aliphatic diisocyanate, an alicyclic diisocyanate, or a compound derived therefrom, from the viewpoint of the weather resistance and the yellowing resistance of the resultant coating film.
In the case where the coating material composition according to the present embodiment contain a solvent having high moisture, a polyester polyol may be neutralized with a base such as amine or ammonia while maintaining a portion of carboxylic acids derived from dibasic acids or the like in the polyester polyol so as to make the polyester polyol be a water-soluble or water-dispersible resin.

[Polyether polyol]

A polyether polyol may be obtained using any of methods (1) to (3) mentioned below.

(1) Methods in which polyether polyols are obtained using a catalyst by conducting random or block addition of a single alkylene oxide or a mixture of alkylene oxides to a single polyhydric hydroxy compound or a mixture of polyhydric hydroxy compounds.
Examples of the catalyst include hydroxides (lithium, sodium, potassium, or the like), strong basic catalysts (alkolates, alkylamines, or the like), and composite metal cyanide complexes (metal porphyrins, zinc hexacyanocobaltate complexes, or the like).
Examples of the alkylene oxide include ethylene oxide, propylene oxide, butylene oxide, cyclohexene oxide, and styrene oxide.
(2) Methods in which polyether polyols are obtained by reacting an alkylene oxide with a polyamine compound.
Examples of the polyamine compound include ethylene diamines.
Examples of the alkylene oxide include the same compounds as those mentioned in the method (1).
(3) Methods in which polymer polyols are obtained by polymerizing acrylamides or the like using polyether polyols obtained by the method (1) or (2) as mediums.

Examples of the polyhydric hydroxy compound include the following compounds (i) to (vi).

(i) Diglycerine, ditrimethylolpropane, pentaerythritol, and dipentaerythritol.
(ii) Sugar alcohol compounds such as erythritol, D-traitol, L-arabinitol, ribitol, xylitol, sorbitol, mannitol, galactitol, and ramnitol.
(iii) Monosaccharides such as arabinose, ribose, xylose, glucose, mannose, galactose, fructose, sorbose, rhamnose, fucose, and ribodesose.
(iv) Disaccharides such as trehalose, sucrose, maltose, cellobiose, gentiobiose, lactose, and melibiose.
(v) Trisaccharides such as raffinose, gentianose, and melicitose.
(vi) Tetrasaccharides such as stachyose.

[Acrylic polyol]

An acrylic polyol may be obtained by polymerizing only polymerizable monomers having at least one active hydrogen in a molecule thereof or copolymerizing polymerizable monomers having at least one active hydrogen in a molecule thereof with other monomers copolymerizable with the polymerizable monomers, as needed.
Examples of the polymerizable monomers having at least one active hydrogen in a molecule thereof include the following compounds (i) to (vi). One of these compounds may be used alone or at least two thereof may be used in combination.

(i) Acrylic acid esters having an active hydrogen, such as 2-hydroxyethyl acrylate, 2-hydroxypropyl acrylate, and 2-hydroxybutyl acrylate.

(ii) Methacrylic acid esters having an active hydrogen, such as 2-hydroxyethyl methacrylate, 2-hydroxypropyl methacrylate, 2-hydroxybutyl methacrylate, 3-hydroxypropyl methacrylate, and 4-hydroxybutyl methacrylate.
(iii) Methacrylic acid esters having polyvalent active hydrogens such as (meth)acrylic acid monoesters of triols such as glycerine or trimethylolpropane.
(iv) Monoethers of polyether polyols (such as polyethylene glycol, polypropylene glycol, or polybutylene glycol) and the above-mentioned (meth)acrylic acid esters having an active hydrogen.
(v) Adducts of glycidyl (meth)acrylate with a monobasic acid (such as an acetic acid, a propionic acid, or a p-tert-butylbenzoic acid).
(vi) Adducts obtained by subjecting lactones (such as ε-caprolactam, or γ-valerolactone) to ring-opening polymerization with an active hydrogen of the (meth)acrylic acid ester having an active hydrogen mentioned above.

Examples of the other monomers copolymerizable with the polymerizable monomers include compounds (i) to (iv) mentioned below. One of these compounds may be used alone or at least two thereof may be used in combination.

(i) (Meth)acrylic acid esters, such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate.
(ii) Unsaturated carboxylic acids (such as acrylic acid, methacrylic acid, maleic acid, and itaconic acid), and unsaturated amides (such as acrylamide, N-methylol acrylamide, and diacetone acrylamide).
(iii) Vinyl monomers having a hydrolyzable silyl group, such as vinyl trimethoxysilane, vinyl methyldimethoxysilane, and γ-(meth)acryloxypropyltrimethoxysilane.
(iv) Other polymerizable monomers, such as styrene, vinyl toluene, vinyl acetate, acrylonitrile, and dibutyl fumarate.

Specific examples of the production method of an acrylic polyol include a method in which the above-mentioned monomers are subjected to solution polymerization in the presence of a radical polymerization initiator, such as a conventionally-known peroxide or azo compound, followed by diluting the resultant with an organic solvent or the like, as needed, to obtain an acrylic polyol.
In the case where the coating material composition according to the present embodiment contains a solvent having high mositure, the coating material composition may be prepared by a conventionally-known method, such as a method in which the monomers are subjected to solution polymerization to convert the resultant to an aqueous layer, or emulsion polymerization. In the case, an acidic moiety of a monomer containing a carboxylic acid such as an acrylic acid or a methacrylic acid or a monomer containing a sulfonic acid may be neutralized with an amine or ammonia to impart water solubility or water dispersibility to an acrylic polyol.

[Polyolefin polyol]

Examples of polyolefin polyols include polybutadienes having at least two hydroxyl groups, hydrogenated polybutadienes having at least two hydroxyl groups, polyisoprenes having at least two hydroxyl groups, and hydrogenated polyisoprenes having at least two hydroxyl groups.
In addition, it is preferable that the number of hydroxyl groups possessed by one statistical molecule of the polyolefin polyol (hereinafter, may be referred to as the "average number of hydroxyl groups") be 2 or more.

[Fluoropolyol]

In the present specification, the term "fluoropolyol" means a polyol containing fluorine in a molecule thereof. Specific examples of the fluoropolol include: fluoroolefins such as those disclosed in Japanese Unexamined Patent Application Publication No. Sho 57-34107 (Reference Document 1) and Japanese Unexamined Patent Application Publication No. Sho 61-275311 (Reference Document 2); and copolymers of cyclovinyl ethers, hydroxyalkylvinyl ethers, or vinyl monocarboxylates.

[Hydroxyl value and acid value of polyol]

The lower limit of the hydroxyl value of the polyol is preferably 10 mgKOH/g, more preferably 20 mgKOH/g, and even more preferably 30 mgKOH/g.
The upper limit of the hydroxyl value of the polyol is preferably 200 mgKOH/g, more preferably 180 mgKOH/g, and even more preferably 160 mgKOH/g.
The hydroxyl value of the polyol is preferably 10 mgKOH/g to 200 mgKOH/g, more preferably 20 mgKOH/g to 180 mgKOH/g, and even more preferably 30 mgKOH/g to 160 mgKOH/g.

In the case where the hydroxyl value of the polyol is the lower limit or more, the transparency and the resistance to thermal-yellowing denaturation of a coating film formed by the coating material composition according to the present embodiment can be further improved.
In the case where the hydroxyl value of the polyol is the upper limit or less, the pot life after mixing the polyol with a polyisocyanate composition can be further improved.
The term "pot life" generally means the time period in which a coating or adhesive composition secures the performance of the composition before curing after preparing the composition by mixing a base component with a curing agent. The term may also be referred to as usable time.
The acid value of the polyol is preferably 0 mgKOH/g to 30 mgKOH/g.
The hydroxyl value and the acid value may be determined in accordance with JIS K1557.
Among these, an acrylic polyol is preferable as a polyol to be contained in the coating material composition according to the present embodiment, from the viewpoint of the weather resistance, the transparency, the resistance to thermal-yellowing denaturation, and the hardness. Alternatively, a polyester polyol is preferable from the viewpoint of mechanical strength, and, oil resistance.
The coating material composition according to the present embodiment preferably contains: the polyisocyanate composition according to the above-mentioned embodiment; and at least one selected from the group consisting of acrylic polyols having a hydroxyl value of 10 mgKOH/g to 200 mgKOH/g, and, polyester polyols having a hydroxyl value of 10 mgKOH/g to 200 mgKOH/g.

[NCO/OH]

The molar ratio (NCO/OH) of isocyanate group of the polyisocyanate composition according to the above-mentioned embodiment, relative to hydroxyl group of the compound having, in a molecule thereof, at least two active hydrogens, is preferably 0.2 to 5.0, more preferably 0.4 to 3.0, and even more preferably 0.5 to 2.0.
In the case where the molar ratio NCO/OH is the lower limit or more, a further strong coating film tends to be obtained. In the case where the molar ratio NCO/OH is the upper limit or less, the smoothness of a coating film tends to be further improved.

<Other additives>

The coating material composition according to the present embodiment may contain, as needed, a melamine-based curing agent such as a perfect alkyl type, a methylol type alkyl, or an imino group type alkyl, in addition to the polyisocyanate composition and the resin component.
Any of the compound having, in a molecule thereof, at least two active hydrogens, the polyisocyanate composition according to the above-mentioned embodiment, and the coating material composition according to the present embodiment may contain an organic solvent.
Although the organic solvent is not particularly limited, the organic solvent preferably has no functional group reactive with a hydroxyl group or an isocyanate group, and preferably have a sufficient compatibility with the polyisocyanate composition. Although such an organic solvent is not limited to the following, specific examples thereof include ester compounds, ether compounds, ketone compounds, aromatic compounds, ethylene glycol dialkyl ether-based compounds, polyethylene glycol dicarboxylate-based compounds, hydrocarbon-based solvents and aromatic solvents, which are generally used as coating material solvents.
Any of the compound having, in a molecule thereof, at least two active hydrogens, the polyisocyanate composition according to the above-mentioned embodiment, and the coating material composition according to the present embodiment may be mixed with various additives used in the art to promote curing, such as a catalyst, a pigment, a leveling agent, an antioxidant, an ultraviolet absorber, a photostabilizer, a plasticizer, or a surfactant, depending on the object or the application purpose thereof, within the range not impairing the desired effects of the present embodiment.
Although the curing promoting catalyst is not limited to the following, examples thereof include metal salts and tertiary amines.
Examples of the metal salts include dibutyltin dilaurate, tin 2-ethylhexanoate, zinc 2-ethylhexanoate, and cobalt salts.
Examples of the tertiary amines include triethylamine, pyridine, methylpyridine, benzyl dimethylamine, N.N-dimethylcyclohexylamine, N-methylpiperidine, pentamethyl diethylene triamine, N,N'-endoethylenepiperazine, and N,N'-dimethylpiperazine.
Examples of the pigment include titanium oxide, carbon black, indigo, quinacridone, and perl mica.
Although the leveling agent is not particularly limited, examples thereof include silicones, AEROSIL, waxes, stearates, and polysiloxanes.
Examples of the antioxidant, the ultraviolet absorber, and the photostabilizer include aliphatic, aromatic or alkyl-substituted aromatic esters of phosphoric acid or phosphorus acid, hypophosphorous acid derivatives, phosphorous compounds, phenolic derivatives (particularly hindered phenol compounds), sulfur-containing compounds, and tin-based compounds. One of these compounds may be contained alone or at least two thereof may be conained in combination.

Examples of the phosphorous compounds include phenylphosphonic acid, phenylphosphinic acid, diphenylphosphonic acid, polyphosphonate, dialkylpentaerythritol diphosphate, and dialkylbisphenol A diphosphite.

Examples of the sulfur-containing compounds include thioether-based compounds, dithionate-based compounds, mercaptobenzimidazole-based compounds, thiocarbanilide-based compounds, and thiodipropionate esters.

Examples of the tin-based compounds include tin malate and dibutyltin monooxide.

Although the plasticizer is not particularly limited, examples thereof include phthalate esters, phosphate esters, fatty acid esters, pyromellitate esters, epoxy plasticizers, polyether plasticizers, liquid rubbers, and non-aromatic paraffin oils.

Examples of the phthalate esters include dioctyl phthalate, dibutyl phthalate, diethyl phthalate, butyl benzyl phthalate, di-2-ethylhexyl phthalate, diisodecyl phthalate, diundecyl phthalate, and diisononyl phthalate.

Examples of the phosphate esters include tricresyl phosphate, triethyl phosphate, tributyl phosphate, tri-2-ethylhexyl phosphate, trimethylhexyl phosphate, trischloroethyl phosphate, and trisdichloropropyl phosphate.

Examples of the fatty acid esters include trimellitic acid octyl ester, trimellitic acid isodecyl ester, trimellitic acid esters, dipentaerythritol esters, dioctyl adipate, dimethyl adipate, di-2-ethylhexyl azelate, dioctyl azelate, dioctyl sebacate, di-2-ethylhexyl sebacate, and methylacetyl ricinocate.

Examples of the pyromellitate esters include octyl pyromellitate.

Examples of the epoxy plasticizers include epoxidized soybean oil, epoxidized linseed oil and epoxidized fatty acid alkyl esters.

Examples of the polyether plasticizers include adipic acid ether ester and polyether.

Examples of the liquid rubber include liquid NBR, liquid acrylic rubber and liquid polybutadiene.

Examples of the surfactant include conventionally-known anionic surfactants, cationic surfactants, and amphoteric surfactants.

<Use>

The coating material composition according to the present embodiment may be used as, without being limited to, a primer or an upper and intermediate coating material to be coated on a material such as metal (such as steel plate or surface-treated steel plate), plastic, wood, film, or inorganic material. Furthermore, the coating composition according to the present embodiment is also useful as a coating material to be used to impart, for example, beautiful appearance, weather resistance, acid resistance, rust resistance and chipping resistance to, for example, precoat metal including anti-rust steel plates or vehicle coating. Moreover, the coating composition according to the present embodiment is also useful as a urethane raw material of an adhesive, a tackifier, an elastomer, a foam, a surface-treating agent, or the like.

«Coating film»

A coating film according to the present embodiment is formed using the coating material composition according to the above-mentioned embodiment. The coating film according to the present embodiment may be formed, for example, by subjecting the coating material composition according to the above-mentioned embodiment to coating such as roll coating, curtain flow coating, spray coating, bell coating, or electrostatic coating, followed by curing the resultant. Thus, the coating film according to the present embodiment exhibits stable quality and is excellent in the transparency and the resistance to thermal-yellowing denaturation.

EXAMPLES

Hereinafter, the present invention will be described in further detail on the basis of Examples. However, the present invention is not limited to these Examples. The measurement method and evaluation method of physical properties of polyisocyanate compositions obtained in Examples and Comparative Examples will be described below.

[Physical property 1] Isocyanate group concentration (NCO%)

The concentration of isocyanate group of polyisocyanate (NCO%) was defined as the amount (% by mass) of isocyanate group contained in the polyisocyanate, and measured by the following method.

5 to 10 g of polyisocyanate was accurately weighed and then dissolved in 20 mL of toluene. 20 mL of a toluene solution of 2N n-dibutylamine was added to the resultant solution, and then the mixture was left still at room temperature for 15 minutes to allow the reaction to proceed. After the reaction ended, the total amount of the resultant reaction mixture

was subjected to back-titration with IN hydrochloric acid using an APB-410 type automatic titrator manufactured by KYOTO ELECTRONICS MANUFACTURING CO., LTD., to measure the volume (sample titration volume) of IN hydrochloric acid required to neutralize unreacted n-dibutylamine in the reaction mixture was determined. On the other hand, the same procedure as described above was conducted except that polyisocyanate was not used, and the volume (blank titration volume) of IN hydrochloric acid required to neutralize unreacted n-dibutylamine was also measured. The isocyanate group concentration (% by mass) was calculated by the following formula (i) using the measured sample titration volume and blank titration volume.

$$\text{Isocyanate group concentration (\% by mass)} = [\{\text{blank titration volume (mL)} - \text{sample titration volume (mL)}\} \times 42 / \{\text{sample mass (g)} \times 1000\}] \times 100 \qquad \text{(i)}$$

[Physical property 2] Viscosity

The viscosity was measured at 25°C using an E-type viscometer manufactured by Tokimec, Inc.). The measurement was conducted using a standard rotor (1°34' × R24). The rotation speed was set as described below.

100 r.p.m. (in the case where the viscosity was less than 128 mPa.s.)
50 r.p.m. (in the case where the viscosity was 128 mPa.s or more and less than 256 mPa.s.)
20 r.p.m. (in the case where the viscosity was 256 mPa.s or more and less than 640 mPa.s.)
10 r.p.m. (in the case where the viscosity was 640 mPa.s or more and less than 1280 mPa.s.)
5 r.p.m. (in the case where the viscosity was 1280 mPa.s or more and less than 2560 mPa.s.)

The viscosity was measured after confirming that the amount of 1,6-hexamethylene diisocyanate (HDI) was less than 0.5% by mass from measurement results of the HDI amount described in [physical property 3] shown below

[Physical property 3] Measurement of the amount of 1,6-hexamethylene diisocyanate (HDI)

The peak area having a retention time corresponding to the molecular weight of HDI was determined under below-mentioned measurement conditions of gel permeation chromatography (GPC). The percentage of the peak area, relative to the total peak area in the chromatogram, was determined as the HDI amount (% by mass).

(Measurement conditions)

- Carrier: THF
- Flow rate: 0.6 mL/min
- Column: Column series "TSKgel Super H1000", "TSKgel Super H2000", and "TSKgel Super H3000" (all of which were manufactured by TOSOH CORPORATION) were connected with each other.
- Detector: Refractometer
- GPC apparatus: "HLC-8120 GPC" (manufactured by TOSOH

CORPORATION)

[Physical property 4] Ratio ((B)/(A)) of the height (B) of the UV absorption peak of the tetrameric equivalent of the diisocyanate to the height (A) of the UV absorption peak of the trimeric equivalent of the diisocyanate

Each polyisocyanate composition was subjected to GPC under measurement conditions mentioned below. Then, the height (B) of the UV absorption peak at the retention time corresponding to the molecular weight of diisocyanate tetramer was determined based on the height (A) of the UV absorption peak at a retention time corresponding to the molecular weight of diisocyanate trimer (isocyanurate trimer) (around 11.7 minutes), the height (A) being read as 100. The ratio ((B)/(A)) of the resultant height (B) relative to the height (A) was calculated. The retention time corresponding to the molecular weight of the diisocyanate tetramer was measured at a peak between the UV absorption peak of the diisocyanate trimer (at around 11.7 minutes) and the UV absorption peak of the diisocyanate pentamer (at around 11.0

minutes).

(Measurement conditions)

- Carrier: THF
- Column: Column series "TSKgel Super H1000", "TSKgel Super H2000", and "TSKgel Super H3000" (all of which were manufactured by TOSOH CORPORATION) were connected with each other.
- Detector: UV (used when the height ratio was calculated; measurement wavelength: 254nm)
  Refractometer (used when the diisocyanate trimer and pentamer were identified.)
- GPC apparatus: "HLC-8120 GPC" (manufactured by TOSOH CORPORATION)

[Physical property 5] Identification of isocyanurate group

$CDCl_3$ solutions of each polyisocyanate composition obtained in Examples and Comparative Examples were prepared. Then, the resultant solutions were subjected to $^{13}C$-NMR measurement under the following measurement conditions to identify an isocyanurate group.

(Measurement conditions)

- Measurement apparatus: Burker Biospin Avance 600
- Observed nuclei: $^{13}C$ (150 MHz)
- Solvent: $CDCl_3$
- Cumulated number: 10,000
- Chemical shift standard: $CDCl_3$ (77 ppm)
- Characteristic peak (chemical shift value) of each composition Isocyanurate group: strong peak at around 148.5 ppm

[Physical property 6] Volatile component generated by storage at 60°C for 3 months

50 g of each polyisocyanate composition obtained in Examples and Comparative Examples was weighed into eggplant flasks, and then subjected to decompression treatment at 23°C and 0.1 Torr for 1 hour.
After the decompression treatment was ended, the reduced pressure in the eggplant flasks was brought into the normal pressure with dry nitrogen, followed by putting stoppers on the eggplant flasks filled with dry nitrogen to determine the mass (C) thereof at the time. The resultant samples filled with nitrogen were stored in an oven at 60°C for 3 months. After the storage, the resultant samples were immersed in an oil bath at 100°C, and then subjected to heating decompression treatment at 0.1 Torr for 1 hour. After the heating decompression treatment was ended, the reduced pressure in the eggplant flasks was brought into the normal pressure with dry nitrogen, and then the resultant samples were cooled at 23°C, followed by putting stoppers on the eggplant flasks filled with dry nitrogen to determine the mass (D) thereof at the time.
The ratio of volatile components was determined by the following formula.

$$\text{Mass reduction rate (\% by mass)} = [(C)-(D)] / (C) \times 100$$

[Evaluation 1] Color stability (confirmation of yellowing degree when stored under high-temperature conditions)

Each polyisocyanate composition was put in 50 mL well-dried glass bottles and then the glass bottles were filled with nitrogen. Then, the glass bottles were stored in an oven at 60°C for 3 months. The Hazen color numbers (APHA) of the polyisocyanate compositions before and after storage were measured using Lovibond automatic chromatometer PFXi-195. Then, the color stability (the yellowing degree when stored under high-temperature conditions) was evaluated in accordance with the following evaluation criteria.

(Evaluation criteria)

- ○: APHA was less than 20.
- Δ: APHA was 20 or more and less than 50.
- ×: APHA was 50 or more.

[Evaluation 2] Viscosity stability (confirmation of the viscosity increase ratio when stored under high-temperature conditions)

Each polyisocyanate composition was put in 50 mL well-dried glass bottles and then the glass bottles were filled with nitrogen. Then, the glass bottles were stored in an oven at 60°C for 3 months. The viscosity of the polyisocyanate compositions before and after storage was measured by the method described in the above-mentioned [Physical property 2]. Then, the viscosity increase ratio (%) was calculated by the following formula (ii).

$$\text{Viscosity increase ratio (\%)} = \text{(viscosity after storage)} / \text{(viscosity before storage)} \times 100 \qquad \text{(ii)}$$

Then, the viscosity stability (the viscosity increase ratio when stored under high-temperature conditions) was evaluated in accordance with the following evaluation criteria.

(Evaluation criteria)

- ○: The viscosity increase ratio was less than 5%.
- Δ: The viscosity increase ratio was 5% or more and less than 10%.
- ×: The viscosity increase ratio was 10% or more.

[Evaluation 3] Drying property of coating material composition

1. Preparation of coating material composition

An acrylic polyol (manufactured by Nuplex Resin, "SETALUX 1753" (trade name), the resin content was 70% by mass, the hydroxyl value was 138.6 mgKOH/g) and each of polyisocyanate compositions were formulated such that the molar ratio of isocyanate group / hydroxyl group became 1.0. Then, ethyl acetate was added to the mixture such that the solid content became 50% by mass to obtain each coating material compositions.

2. Preparation of coating film

Then, each of the resultant coating material compositions was coated on glass plates such that the dried film thickness became 40 μm. Then, the resultant samples were cured at 23°C and 50% RH to form coating film.

3. Evaluation of drying property

After a predetermined time had elapsed since curing started, a cotton ball (having a cylindrical shape having a diameter of 2.5 cm and a high of 2.0 cm) was placed on the coating film and then a 100 g weight was placed thereon for 60 seconds. Then, the weight and the cotton ball were removed therefrom, and the imprint of the cotton ball on the coating film was observed. Then, the drying property was evaluated in accordance with the following evaluation criteria.

(Evaluation criteria)

- ○: The time required for the imprint to disappear completely was 8 hours or less.

Δ: The time required for the imprint to disappear completely was more than 8 hours but 10 hours or less.
×: The time required for the imprint to disappear completely was more than 10 hours.

[Evaluation 4] Solvent reducibility (turbidity) of coating material composition

1. Preparation of coating material composition

Each coating material compositions was obtained by the same method as that described in "1" in the [Evaluation 3].

2. Evaluation of solvent reducibility (turbidity)

Then, the turbidity of each resultant coating material composition was measured at 25°C and at a measurement wavelength of 860 nm using a turbidity meter/chromatometer (manufactured by HACH, "2100 AN" (trade name)). The solvent reducibility (turbidity) was evaluated based on the measurement results in accordance with the following evaluation criteria.

(Evaluation criteria)

○: 0.0 or more and less than 0.5
Δ: 0.5 or more and less than 1.0
×: 1.0 or more

[Evaluation 5] Transparency of coating film

1. Preparation of coating film

Coating material compositions having the following formulation were prepared. The resultant coating material compositions were coated on glass plates such that the dry film thickness thereof became 100 μm to 120 μm. Then, the resultant plates were left at room temperature for 20 minutes, followed by baking the resultant plates at 120°C for 30 minutes to form urethane coating films.

(Formulation of coating material composition)

- Each of polyisocyanate compositions obtained in Examples and Comparative Examples
- Polyol (Setalux 1767)
- Formulation ratio (NCO/OH = 1.05)
- Diluent solvent: Butyl acetate
- Solid content in coating material: 50% by mass

2. Evaluation of transparency

A printed material was placed under the glass plate on which the resultant urethane coating film was laminated and then visually observed from above. The transparency was evaluated based on the readable degree of printed characters in accordance with the following evaluation criteria.

(Evaluation criteria)

○: Characters were clearly readable.
Δ: Characters were slightly dulled.
×: Characters were unambiguously dulled.

[Evaluation 6] Resistance to thermal-yellowing denaturation of coating film

1. Preparation of coating film (test plate)

Coating material compositions formulated in the same manner as that of [evaluation 5] were prepared. Then, the resultant coating material compositions were coated on white tile plates such that the dried coating film thickness became 35 μm. Then, the resultant white tile plates on which the coating material compositions were coated were placed horizontally, and then left still for 15 minutes. Then, the resultant plates were heated at 100°C for 30 minutes to prepare test plates.

2. Evaluation of resistance to thermal-yellowing denaturation

Then, the b-value (b1) of the resultant test plate was measured using a white standard plate with a measurement hole φ50 mm using a SM color meter (SM-P45 type) manufactured by Suga Test Instruments Co., Ltd. Then, the test plate was stored in a dryer at 100°C, and the b-value (b2) thereof was measured every 1 week up to 8 weeks. The time required for the value obtained by (b2)-(b1) to exceed 5 was measured. The resistance to thermal-yellowing denaturation was evaluated based on the obtained results in accordance with the following evaluation criteria.

(Evaluation criteria)

○: 8 weeks or more
Δ: 4 weeks or more and less than 8 weeks
×: less than 4 weeks

[Evaluation 7] Odor generated when coating film was baked and stored at a high-temperature.

1. Preparation of coating film (test plate)

Each coating material compositions was prepared in the same manner as that described in "1." of [Evaluation 3]. Then, the resultant coating material compositions were coated respectively on PET films (of which the thickness was 100 μm) such that the dried film thickness became 40 μm. Then, the PET films on which the coating material compositions were coated were placed horizontally and left still for 15 minutes. Then, the resultant films were heated in an oven at 100°C for 30 minutes to obtain test plates.

2. Odor generated when coating film was baked

The odor generated immediately after the test plates were heated at 100°C for 30 minutes and then brought out from the oven was confirmed.

(Evaluation criteria)

○: The odor was slightly sensed.
×: The odor was strongly and unpleasantly sensed.

3. Odor generated when coating film was stored at a high-temperature.

The resultant test plates were cut into a size of 5 cm × 10 cm, rounded, and then put into screw glass bottles, followed by putting the lids thereon. Then, the resultant bottles were heated in an oven at 150°C for 2 hours and removed therefrom. The lids of the removed screw bottles were opened, and the odor thereof was confirmed.

(Evaluation criteria)

○: The odor was slightly sensed.
×: The odor was strongly and unpleasantly sensed.

[Example 1] Preparation of polyisocyanate composition (PI-A1)

100 parts by mass of 1,6-hexamethylene diisocyanate (hereinafter, may be abbreviated as "HDI") was poured into a 1L four-necked glass flask equipped with a thermometer, a stirrer and a nitrogen seal tube, and then the air in the flask was replaced with nitrogen, followed by heating the flask at 60°C. Then, 0.5 parts by mass of 2-ethylhexanol (hereinafter, may be abbreviated as "2-EHOH") was added to the resultant, and then stirred for 10 minutes. Then, an isobutanol (hereinafter, may be abbreviated as "i-BuOH") solution containing 5% by mass of benzyltrimethylammonium caprate (hereinafter, may be abbreviated as "BTMACA") was added to the resultant over 60 minutes such that the content of BTMACA became 0.005 parts by mass. The temperature during the reaction was controlled within a range of 60±2°C. When the desired NCO% was obtained, 0.005 parts by mass of dibutylphosphoric acid (hereinafter, may be abbreviated as "DBP") was added to the resultant as a reaction-terminating agent, and then heated to 100°C. When the temperature reached 100°C, the resultant was stirred for 1 hour. The resultant reaction liquid was colorless and transparent. The reaction liquid was subjected to filtration using a membrane filter having a pore size of 1 μm to obtain a reaction liquid. Then, the resultant reaction liquid was subjected to thin film distillation, and the resultant liquid was heated at 150°C for 1 hour while stirring and irradiating the resultant liquid with UV intermittently under vacuum conditions (0.8 Torr). As the UV irradiation, 4 sets were conducted by repeating the following steps: irradiating the resultant liquid with UV (at 365 nm) for 5 minutes and then leaving the resultant liquid unirradiated for 10 minutes, as 1 set, after the temperature of the resultant liquid reached 150°C. Four sets of the UV irradiation were conducted. Then, the thin-film distillation was conducted again to obtain the polyisocyanate composition (PI-A1). The physical properties of the resultant polyisocyanate composition (PI-A1) were measured and evaluated by the above-mentioned methods. The results are shown in Table 1 indicated below.

[Examples 2 and 3 and Comparative Example 1] Preparation of polyisocyanate compositions (PI-A2), (PI-A3) and (PI-B1)

The reaction, termination treatment, filtration treatment and thin film distillation of reaction liquids were conducted in the same manner as that of Example 1. Then, the heating treatment was conducted under conditions shown in Table 1 indicated below. Then, the thin film distillation was conducted again to obtain polyisocyanate compositions (PI-A2), (PI-A3) and (PI-B1). The physical properties of the resultant polyisocyanate compositions (PI-A2), (PI-A3), and (PI-B1) were measured and evaluated by the above-mentioned methods. The results are shown in Table 1 indicated below.

[Example 4] Preparation of polyisocyanate composition (PI-A4)

100 parts by mass of HDI was poured into a 1L four-necked glass flask equipped with a thermometer, a stirrer and a nitrogen seal tube, and then the air in the flask was replaced with nitrogen, followed by heating the flask at 60°C. Then, 0.443 parts by mass of 2-EHOH was added to the resultant, and then stirred for 10 minutes. Then, an i-BuOH solution containing 5% by mass of BTMACA was added to the resultant over 60 minutes such that the content of BTMACA became 0.008 parts by mass. The temperature during the reaction was controlled within a range of 60±2°C. When the desired NCO% was obtained, 0.008 parts by mass of DBP was added to the resultant as a reaction-terminating agent, and then heated to 100°C. When the temperature reached 100°C, the resultant was stirred for 1 hour. The resultant reaction liquid was colorless and transparent. The reaction liquid was subjected to filtration using a membrane filter having a pore size of 1 μm to obtain a reaction liquid. Then, the resultant reaction liquid was subjected to thin film distillation, and the resultant liquid was heated at 120°C for 15 minutes while stirring and irradiating the resultant liquid with UV intermittently under vacuum conditions (0.8 Torr). As the UV irradiation, 1 set was conducted by irradiating the resultant liquid with UV (at 365 nm) for 5 minutes and then leaving the resultant liquid unirradiated for 10 minutes, after the temperature of the resultant liquid reached 150°C. Then, the thin-film distillation was conducted again to obtain the polyisocyanate composition (PI-A4). The physical properties of the resultant polyisocyanate composition (PI-A4) were measured and evaluated by the above-mentioned methods. The results are shown in Table 1 indicated below.

[Comparative Example 2] Preparation of polyisocyanate composition (PI-B2)

100 parts by mass of HDI was poured into a 1L four-necked glass flask equipped with a thermometer, a stirrer and a nitrogen seal tube, and then the air in the flask was replaced with nitrogen, followed by heating the flask at 60°C. Then, an i-BuOH solution containing 47% by mass of BTMACA was added over 60 minutes such that the content of BTMACA became 0.03 parts by mass. The temperature during the reaction was controlled within a range of 60±2°C. When the desired NCO% was obtained, 0.03 parts by mass of DBP was added to the resultant as a reaction-terminating

agent, and then heated to 100°C. When the temperature reached 100°C, the resultant was stirred for 1 hour. The resultant reaction liquid was colorless and transparent. The reaction liquid was subjected to filtration using a membrane filter having a pore size of 1 μm to obtain a reaction liquid. Then, the resultant reaction liquid was subjected to thin film distillation, and the resultant liquid was heated at 100°C for 15 minutes while stirring and irradiating the resultant liquid with UV intermittently under vacuum conditions (0.8 Torr). As the UV irradiation, 1 set was conducted by irradiating the resultant liquid with UV (at 365 nm) for 5 minutes and then leaving the resultant liquid unirradiated for 10 minutes, after the temperature of the resultant liquid reached 100°C. Then, the thin-film distillation was conducted again to obtain the polyisocyanate composition (PI-B2). The physical properties of the resultant polyisocyanate composition (PI-B2) were measured and evaluated by the above-mentioned methods. The results are shown in Table 1 indicated below.

[Comparative Example 3] Preparation of polyisocyanate composition (PI-B3)

100 parts by mass of HDI was poured into a 1L four-necked glass flask equipped with a thermometer, a stirrer and a nitrogen seal tube, and then the air in the flask was replaced with nitrogen, followed by heating the flask at 60°C. Then, an i-BuOH solution containing 47% by mass of BTMACA was added over 60 minutes such that the content of BTMACA became 0.04 parts by mass. The temperature during the reaction was controlled within a range of 60±2°C. When the desired NCO% was obtained, 0.04 parts by mass of DBP was added to the resultant as a reaction-terminating agent, and then heated to 100°C. When the temperature reached 100°C, the resultant was stirred for 1 hour. The resultant reaction liquid was colorless and transparent. The reaction liquid was subjected to filtration using a membrane filter having a pore size of 1 μm to obtain a reaction liquid. Then, the resultant reaction liquid was subjected to thin film distillation twice to obtain a polyisocyanate composition (PI-B3). The physical properties of the resultant polyisocyanate composition (PI-B3) were measured and evaluated by the above-mentioned methods. The results are shown in Table 1 indicated below.

[Comparative Example 4] Preparation of polyisocyanate composition (PI-B4)

100 parts by mass of HDI was poured into a 1L four-necked glass flask equipped with a thermometer, a stirrer and a nitrogen seal tube, and then the air in the flask was replaced with nitrogen, followed by heating the flask at 60°C. Then, 0.5 parts by mass of 2-EHOH was added to the resultant, and then stirred for 10 minutes. Then, an i-BuOH solution containing 5% by mass of BTMACA was added over 60 minutes such that the content of BTMACA became 0.005 parts by mass. The temperature during the reaction was controlled within a range of 60±2°C. When the desired NCO% was obtained, 0.005 parts by mass of DBP was added to the resultant as a reaction-terminating agent, and then heated to 100°C. When the temperature reached 100°C, the resultant was stirred for 1 hour. The resultant reaction liquid was colorless and transparent. The reaction liquid was subjected to filtration using a membrane filter having a pore size of 1 μm to obtain a reaction liquid. Then, the resultant reaction liquid was subjected to thin film distillation, and the resultant liquid was heated at 150°C for 1 hour while stirring the resultant liquid under vacuum conditions (0.8 Torr). Then, the thin film distillation was conducted again to obtain a polyisocyanate composition. The resultant polyisocyanate composition was irradiated with UV (at 365 nm) for 30 minutes to obtain a polyisocyanate composition (PI-B4). The physical properties of the resultant polyisocyanate composition (PI-B4) were measured and evaluated by the above-mentioned methods. The results are shown in Table 1 indicated below.

Table 1

| | | Example | | | |
|---|---|---|---|---|---|
| | | 1 | 2 | 3 | 4 |
| | | PI-A1 | PI-A2 | PI-A3 | PI-A4 |
| Reaction temperature (°C) | | 60 | 60 | 60 | 70 |
| HDI (parts by mass) | | 100.0 | 100.0 | 100.0 | 100.0 |
| BTMACA (parts by mass) | | 0.005 | 0.005 | 0.005 | 0.008 |
| i-BuOH (parts by mass) | | 0.095 | 0.095 | 0.095 | 0.152 |
| 2-EHOH (parts by mass) | | 0.500 | 0.500 | 0.500 | 0.443 |
| Heating treatment | Temperature (°C) | 150 | 120 | 120 | 120 |
| | Time (minute) | 60 | 60 | 30 | 15 |
| | Frequency of UV irradiation | 4 sets | 4 sets | 2 sets | 1 set |
| Physical property 1 | NCO% | 21.9 | 22.0 | 22.0 | 22.0 |
| Physical property 2 | Viscosity (mPa·s) | 2680 | 2610 | 2600 | 2650 |
| Physical property 4 | Nurate trimer (UV) (A) | 100 | 100 | 100 | 100 |
| | Tetrameric equivalent (UV) (B) | 2 | 5 | 24 | 225 |
| | (B)/(A) | 0.02 | 0.05 | 0.24 | 2.25 |
| Physical property 6 | Volatile component generated by storage at 60°C for 3 months | 0.05 | 0.08 | 0.09 | 0.25 |
| Evaluation 1 | Color stability | △ | ○ | ○ | ○ |
| Evaluation 2 | Viscosity stability | ○ | ○ | ○ | △ |
| Evaluation 3 | Drying property of coating material composition | △ | △ | ○ | ○ |
| Evaluation 4 | Solvent reducibility of coating material composition | ○ | ○ | ○ | △ |
| Evaluation 5 | Transparency of coating film | ○ | ○ | ○ | △ |
| Evaluation 6 | Resistance to thermal-yellowing denaturation of coating film | △ | ○ | ○ | ○ |
| Evaluation 7 | Odor generated when coating film was stored at a high temperature | ○ | ○ | ○ | △ |
| | Odor generated when coating film was baked | ○ | ○ | ○ | △ |

Table 1 (continuted)

| | | Comparative Example | | | |
|---|---|---|---|---|---|
| | | 1 | 2 | 3 | 4 |
| | | PI-B1 | PI-B2 | PI-B3 | PI-B4 |
| Reaction temperature (°C) | | 60 | 60 | 60 | 60 |
| HDI (parts by mass) | | 100.0 | 100.0 | 100.0 | 100.0 |
| BTMACA (parts by mass) | | 0.005 | 0.030 | 0.040 | 0.005 |
| i-BuOH (parts by mass) | | 0.095 | 0.034 | 0.045 | 0.095 |
| 2-EHOH (parts by mass) | | 0.500 | | | 0.500 |
| Heating treatment | Temperature (°C) | 150 | 100 | - | 150 |
| | Time (minute) | 90 | 15 | - | 60 |
| | Frequency of UV irradiation | 6 sets | 1 set | - | 0 set |
| Physical property 1 | NCO% | 21.9 | 21.9 | 21.9 | 21.9 |
| Physical property 2 | Viscosity (mPa·s) | 2690 | 2720 | 2690 | 2700 |
| Physical property 4 | Nurate trimer (UV) (A) | 100 | 100 | 100 | 100 |
| | Tetrameric equivalent (UV) (B) | 0.1 | 400 | 500 | 30 |
| | (B)/(A) | 0.001 | 4 | 5 | 0.3 |
| Physical property 6 | Volatile component generated by storage at 60°C for 3 months | <0.05 | 0.41 | 0.45 | 0.39 |
| Evaluation 1 | Color stability | × | ○ | ○ | ○ |
| Evaluation 2 | Viscosity stability | ○ | × | × | ○ |
| Evaluation 3 | Drying property of coating material composition | × | ○ | ○ | ○ |
| Evaluation 4 | Solvent reducibility of coating material composition | ○ | × | × | ○ |
| Evaluation 5 | Transparency of coating film | ○ | × | × | ○ |
| Evaluation 6 | Resistance to thermal-yellowing denaturation of coating film | × | ○ | ○ | ○ |
| Evaluation 7 | Odor generated when coating film was stored at a high temperature | ○ | × | × | × |
| | Odor generated when coating film was baked | ○ | × | × | × |

As shown in Table 1, the color stability and the viscosity stability of the polyisocyanate compositions PI-A1 to PI-A4 (Examples 1 to 4) were excellent. Furthermore, the coating material compositions containing these polyisocyanate compositions were favorable in terms of the drying property and the solvent reducibility. Furthermore, the coating films formed using these coating material compositions were favorable in terms of the transparency and the resistance to thermal-yellowing denaturation.

Furthermore, the polyisocyanate compositions PI-A2 and PI-A3 (Examples 2 and 3) were superior to the polyisocyanate compositions PI-A1 and PI-A4 (Examples 1 and 4), in terms of the color stability and the viscosity stability. Furthermore, the coating material compositions containing these polyisocyanate compositions were further favorable in terms of the solvent reducibility. Furthermore, the coating films formed using these coating material compositions were further favorable in terms of the transparency and the resistance to thermal-yellowing denaturation.

In contrast, the polyisocyanate compositions PI-B1 to PI-B3 (Comparative Examples 1 to 3) were inferior in terms of the color stability or the viscosity stability. Furthermore, the coating material compositions were also inferior in terms of the drying property or the solvent reducibility. Furthermore, the coating films were also inferior in terms of the transparency or the resistance to thermal-yellowing denaturation.

Furthermore, the coating film formed using the coating material composition containing the polyisocyanate composition PI-B4 (Comparative Example 4) generated strong and unpleasant odor when baked or stored under high-temperature conditions.

It was confirmed from the above-mentioned results that the polyisocyanate composition according to the present embodiment had excellent color stability and viscosity stability when stored under high-temperature conditions. Furthermore, it was confirmed that the resultant coating material composition had favorable drying property and solvent reducibility. Furthermore, it was confirmed that the resultant coating film had favorable transparency and resistance to thermal-yellowing denaturation.

INDUSTRIAL APPLICABILITY

The polyisocyanate composition according to the present embodiment is useful as a coating material, an adhesive, a sealant, a waterproof material, a foam, an elastomer, a fiber treatment agent, or the like.

## Claims

**1.** A polyisocyanate composition, comprising a polyisocyanate having an isocyanurate group derived from at least one diisocyanate selected from the group consisting of aliphatic diisocyanates and alicyclic diisocyanates, the polyisocyanate composition having UV absorption peaks of a trimeric equivalent of the diisocyanate and a tetrameric equivalent of the diisocyanate in a spectrum of the polyisocyanate composition measured by gel permeation chromatography, wherein
a ratio (B)/(A) of a height (B) of the UV absorption peak of the tetrameric equivalent of the diisocyanate to a height (A) of the UV absorption peak of the trimeric equivalent of the diisocyanate is 0.01 to 3, and
a content of a volatile component produced by storage for three months at 60°C, relative to a total mass of the polyisocyanate composition prior to the storage, from which the volatile component is removed in advance, is 0.3% by mass or less.

**2.** The polyisocyanate composition according to claim 1, further comprising a polyisocyanate having an allophanate group.

**3.** The polyisocyanate composition according to claim 1 or 2, further comprising a polyisocyanate having a uretdione group.

**4.** The polyisocyanate composition according to any one of claims 1 to 3, further comprising a polyisocyanate having an iminooxadiazinedione group.

**5.** A coating material composition comprising a polyisocyanate composition of any one of claims 1 to 4.

**6.** A coating film formed by a coating material composition of claim 5.

## INTERNATIONAL SEARCH REPORT

International application No. PCT/JP2018/038653

A. CLASSIFICATION OF SUBJECT MATTER
Int.Cl. C08G18/02(2006.01)i, C08G18/09(2006.01)i, C08G18/79(2006.01)i, C09D175/04(2006.01)i

According to International Patent Classification (IPC) or to both national classification and IPC

B. FIELDS SEARCHED

Minimum documentation searched (classification system followed by classification symbols)
Int.Cl. C08G18/02, C08G18/09, C08G18/79, C09D175/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2016-53127 A (ASAHI KASEI CHEMICALS CORP.) 14 April 2016, claims, paragraphs [0022]-[0023], [0026]-[0031], [0033]-[0034], examples (Family: none) | 1-6 |
| X | WO 2016/035887 A1 (ASAHI KASEI CHEMICALS CORP.) 10 March 2016, claims, paragraphs [0020]-[0021], [0028]-[0029], [0032]-[0037], examples & US 2017/0253688 A1, claims, paragraphs [0034], [0036], [0042], [0045]-[0048], examples & EP 3190132 A1 & CN 106604944 A & ES 2682979 T | 1-6 |
| PX | JP 2018-28019 A (ASAHI KASEI CORPORATION) 22 February 2018, claims, paragraphs [0012]-[0013], [0015]-[0016], [0023]-[0024], [0027]-[0032], examples (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 January 2019 (07.01.2019) | 22 January 2019 (22.01.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017203751 A
- JP 4201582 B
- JP 5178200 B
- JP 5183206 B
- JP 3065889 B
- JP 2015172164 A
- WO 2010046327 A
- JP SHO5734107 B
- JP SHO61275311 B